# EUROPEAN PATENT APPLICATION

(11) **EP 4 814 784 A1**
(43) Date of publication of application: **30.09.2026**
(21) Application number: 25195289.1
(22) Date of filing: 12.08.2025
(51) Int. Cl.: G06F 40/216, G06F 40/30, G06F 40/35, G06F 40/58

(54) **INFORMATION PROCESSING SYSTEM, INFORMATION PROCESSING PROGRAM, AND INFORMATION PROCESSING METHOD**

(30) Priority: 26.03.2025 JP 2025052707
(71) Applicant: FUJIFILM Business Innovation Corp., Minato-ku Tokyo (JP)
(72) Inventor: YOKOTA, Masaru, Yokohama-shi, Kanagawa (JP); MORI, Junichiro, Yokohama-shi, Kanagawa (JP); MITSUHASHI, Tomoyuki, Yokohama-shi, Kanagawa (JP); SAWAI, Kenji, Yokohama-shi, Kanagawa (JP)
(74) Representative: Becker Kurig & Partner Patentanwälte mbB

(57) **Abstract**

An information processing system includes a processor configured to acquire first information indicating conversation information between a user who uses a target apparatus and an operator or a system that receives an inquiry related to a failure in the target apparatus, acquire second information obtained by translating a language of the first information into a language of learning information used for training an answer model having a diagnostic function related to the failure, acquire answer information for the failure output from the answer model by inputting the second information into the answer model, and output the answer information.

## Description

### BACKGROUND OF THE INVENTION

### (i) Field of the Invention

The present disclosure relates to an information processing system, an information processing program, and an information processing method.

### (ii) Description of Related Art

JP2020-154662A discloses a maintenance work support apparatus including a first acquisition unit that acquires a dataset including a combination of apparatus information of a target apparatus and operation information of the target apparatus or a dataset including a combination of apparatus information of a target apparatus and event information indicating an event related to the target apparatus, a second acquisition unit that acquires work content information that is content of maintenance work performed on the target apparatus by a maintenance worker and in which a replaced or repaired component or a new component after replacement is recorded, and a learning unit that learns the dataset acquired by the first acquisition unit and the replaced or repaired component or the new component after replacement recorded in the work content information acquired by the second acquisition unit, in association with each other.

### SUMMARY OF THE INVENTION

An object of the present disclosure is to provide an information processing system, an information processing program, and an information processing method capable of, in using a model that outputs an answer to an inquiry related to a failure in a target apparatus, obtaining an answer to an inquiry using the model even in a case where an inquiry in a different language from a language used for training the model is received.

In order to achieve the above object, according to a first aspect of the present disclosure, there is provided an information processing system including a processor configured to acquire first information indicating conversation information between a user who uses a target apparatus and an operator or a system that receives an inquiry related to a failure in the target apparatus, acquire second information obtained by translating a language of the first information into a language of learning information used for training an answer model having a diagnostic function related to the failure, acquire answer information for the failure output from the answer model by inputting the second information into the answer model, and output the answer information.

According to a second aspect of the present disclosure, in the information processing system according to the first aspect, the conversation information may be at least one of record information related to a conversation between the user and the operator created by the operator or sentence information in which audio information between the user and the operator is transcribed in a sentence.

According to a third aspect of the present disclosure, in the information processing system according to the first aspect, the first information may be information registered in the system via a user terminal operated by the user.

According to a fourth aspect of the present disclosure, in the information processing system according to any one of the first aspect to the third aspect, the processor may be configured to specify which language is the language of the first information, and acquire the second information obtained by translating the specified language into the language of the learning information.

According to a fifth aspect of the present disclosure, in the information processing system according to the fourth aspect, the processor may be configured to specify which language is the language of the first information, in a case where the specified language is different from the language of the learning information, acquire the second information by translating the specified language into the language of the learning information, and acquire the answer information output from the answer model by inputting the second information into the answer model, and in a case where the specified language is the same as the language of the learning information, acquire the answer information output from the answer model by inputting the first information into the answer model.

According to a sixth aspect of the present disclosure, in the information processing system according to the fourth aspect or the fifth aspect, the processor may be configured to specify which language is the language of the first information in accordance with positional information of the target apparatus.

According to a seventh aspect of the present disclosure, in the information processing system according to the fourth aspect or the fifth aspect, the first information may be information registered via a user terminal operated by the user who uses the target apparatus, and the processor may be configured to specify which language is the language of the first information in accordance with language setting information of the user terminal.

According to an eighth aspect of the present disclosure, in the information processing system according to the fourth aspect or the fifth aspect, the processor may be configured to specify which language is the language of the first information in accordance with a text or a word included in the first information.

According to a ninth aspect of the present disclosure, in the information processing system according to any one of the first aspect to the eighth aspect, the processor may be configured to, in translating the first information into the second information, translate the first information into the second information using a word used for training the answer model.

According to a tenth aspect of the present disclosure, in the information processing system according to any one of the first aspect to the ninth aspect, the processor may be configured to, in translating the first information into the second information using a large language model, translate the first information into the second information by inputting a prompt providing an instruction to translate the first information into the second information using a word used for training the answer model into the large language model.

According to an eleventh aspect of the present disclosure, there is provided an information processing program causing a computer to execute a process including acquiring first information indicating conversation information between a user who uses a target apparatus and an operator who receives an inquiry related to a failure in the target apparatus, acquiring second information obtained by translating a language of the first information into a language of learning information used for training an answer model having a diagnostic function related to the failure, acquiring answer information for the failure output from the answer model by inputting the second information into the answer model, and outputting the answer information.

According to a twelfth aspect of the present disclosure, there is provided an information processing method including acquiring first information indicating conversation information between a user who uses a target apparatus and an operator who receives an inquiry related to a failure in the target apparatus, acquiring second information obtained by translating a language of the first information into a language of learning information used for training an answer model having a diagnostic function related to the failure, acquiring answer information for the failure output from the answer model by inputting the second information into the answer model, and outputting the answer information.

According to the first aspect, the eleventh, or the twelfth aspect of the present disclosure, in using a model that outputs an answer to the inquiry related to the failure in the target apparatus, the answer to the inquiry can be obtained using the model even in a case where the inquiry in a language different from the language used for training the model is received.

According to the second aspect of the present disclosure, the answer corresponding to the record information of the conversation actually created by the operator or the sentence information in which audio between the user and the operator is transcribed in a sentence can be obtained.

According to the third aspect of the present disclosure, the answer corresponding to the information actually input by the user can be obtained.

According to the fourth aspect of the present disclosure, translation corresponding to a language of inquiry information can be executed.

According to the fifth aspect of the present disclosure, in a case where the language of the inquiry is the same as the language used for training the answer model, the answer can be obtained by simply inputting the inquiry into the answer model.

According to the sixth aspect of the present disclosure, in accordance with whether or not the target apparatus is present at any location, the language of the inquiry can be translated into a language used at the location.

According to the seventh aspect of the present disclosure, the language of the inquiry can be easily specified using the language setting information of the terminal operated by the user.

According to the eighth aspect of the present disclosure, the language of the inquiry can be easily specified using the text or the word included in the inquiry.

According to the ninth aspect of the present disclosure, by translating the inquiry using the word used for training the answer model, a more accurate answer can be obtained compared to a case where the inquiry is simply translated.

According to the tenth aspect of the present disclosure, in executing translation using the large language model, by translating the inquiry using the word used for training the answer model, a more accurate answer can be obtained compared to a case where the inquiry is simply translated.

### BRIEF DESCRIPTION OF THE DRAWINGS

Exemplary embodiment(s) of the present invention will be described in detail based on the following figures, wherein:
FIG. 1 is a diagram illustrating a schematic configuration of an answer system 10 according to an exemplary embodiment;
FIG. 2 is a diagram for describing the exemplary embodiment;
FIG. 3 is a block diagram illustrating an example of hardware configurations of an information processing apparatus, a user terminal, and an operator terminal according to the exemplary embodiment;
FIG. 4 is a block diagram illustrating a functional configuration example of the information processing apparatus; and
FIG. 5 is a flowchart illustrating an example of a flow of information processing in the information processing apparatus according to the exemplary embodiment.

### DETAILED DESCRIPTION OF THE INVENTION

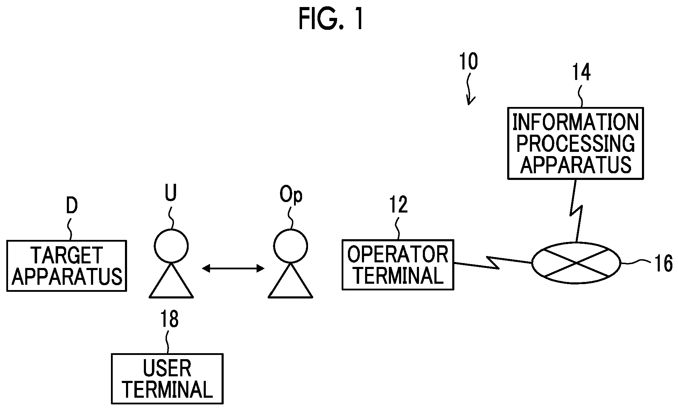

Hereinafter, an example of the present exemplary embodiment will be described in detail with reference to the drawings. In the present exemplary embodiment, an answer system in which a terminal, an information processing apparatus, and the like are connected to each other via a communication line such as various networks will be described as an example. FIG. 1 is a diagram illustrating a schematic configuration of an answer system 10 according to the present exemplary embodiment.

As illustrated in FIG. 1, the present exemplary embodiment assumes a scene where an operator Op receives an inquiry related to a failure in a target apparatus D from a user U who uses the target apparatus D. In such a scene, for example, conversation information between the user U and the operator Op is acquired through a telephone conversation between the user U and the operator Op.

The operator Op transmits the conversation information to an information processing apparatus 14 by operating an operator terminal 12. The information processing apparatus 14 inputs the conversation information into an answer model. Answer information for the failure in the target apparatus D included in the conversation information is output from the answer model.

The answer model is a well-known machine learning model and is trained in advance using a well-known machine learning algorithm and artificial intelligence technology. The answer model is trained based on learning information prepared in advance. The learning information is information in which information related to the failure in the target apparatus and information about a countermeasure for the failure are associated with each other.

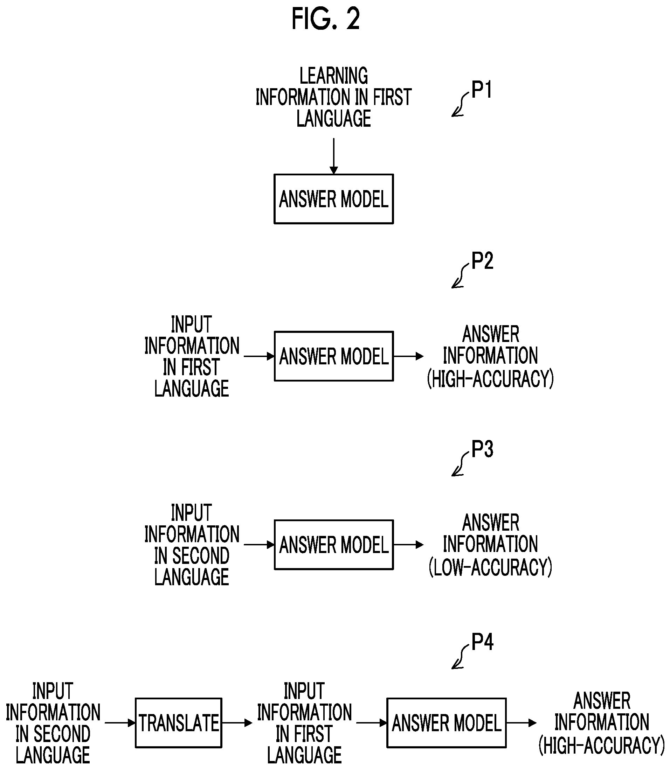

FIG. 2 is a diagram for describing the present exemplary embodiment. As illustrated in P1 of FIG. 2, the answer model of the present exemplary embodiment is trained in advance using the learning information in a first language. Thus, as illustrated in P2 of FIG. 2, in a case where input information expressed in the first language is input into the answer model, the answer model is assumed to output high-accuracy answer information.

Meanwhile, as illustrated in P3 of FIG. 2, in a case where the input information expressed in a second language different from the first language is input into the answer model, the answer model is assumed to output low-accuracy answer information. The low-accuracy answer information is output because the answer model is trained in advance using the learning information in the first language.

Therefore, in the present exemplary embodiment, as illustrated in P4 of Fig. 2, in a case where the input information is expressed in the second language, the second language of the input information is translated into the first language used for training the answer model. In the present exemplary embodiment, the input information translated into the first language is input into the answer model. Accordingly, even in a case where an inquiry in a language different from the language used for training the answer model is received, an answer to the inquiry may be obtained using the answer model.

As illustrated in FIG. 1, the answer system 10 according to the present exemplary embodiment includes the operator terminal 12, the information processing apparatus 14, and the like. The operator terminal 12 and the information processing apparatus 14 are connected to each other via a communication line 16 such as a local area network (LAN), a wide area network (WAN), the Internet, or an intranet. Each of the operator terminal 12 and the information processing apparatus 14 can transmit and receive various types of data to and from each other via the communication line 16. The information processing apparatus 14 acquires the answer information output from the answer model by inputting the conversation information transmitted from the operator terminal 12 into the answer model, and outputs the answer information to the operator terminal 12. The answer system 10 may further include a user terminal 18 illustrated in FIG. 1. In this case, the user terminal 18 can communicate with the operator terminal 12, the information processing apparatus 14, and the like and, for example, transmit and receive various types of data to and from each other via the communication line 16.

While the number of each of the operator terminal 12, the information processing apparatus 14, and the user terminal 18 illustrated in FIG. 1 is one, the number of each of the operator terminal 12, the information processing apparatus 14, and the user terminal 18 may be plural, or the number of some of the operator terminal 12, the information processing apparatus 14, and the user terminal 18 may be plural.

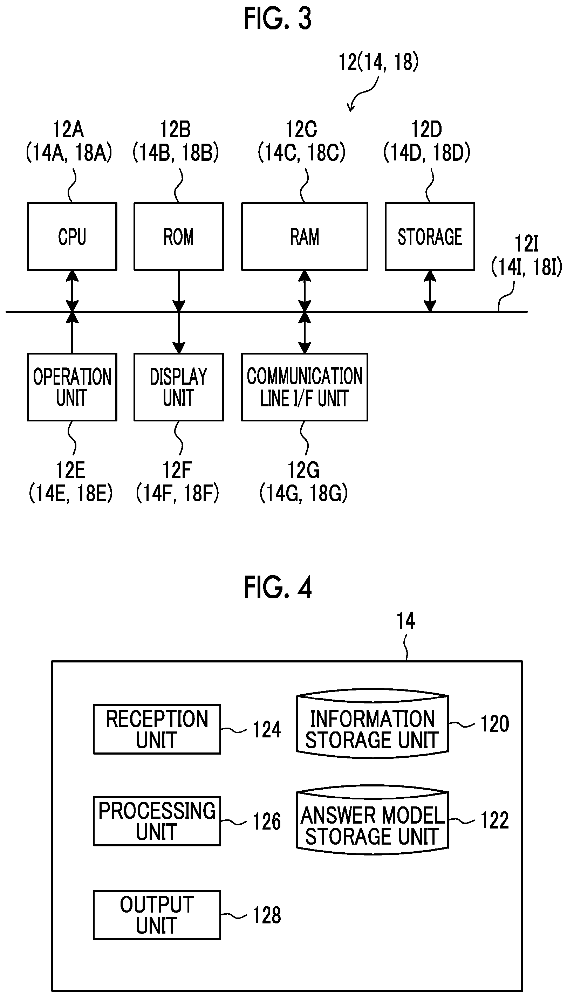

Basic configurations of electrical systems of the operator terminal 12, the information processing apparatus 14, and the user terminal 18 according to the present exemplary embodiment will be described. FIG. 3 is a block diagram illustrating the basic configurations of the electrical systems of the operator terminal 12, the information processing apparatus 14, and the user terminal 18 in the answer system 10 according to the present exemplary embodiment. The operator terminal 12, the information processing apparatus 14, and the user terminal 18 have general computer configurations. Thus, the information processing apparatus 14 will be representatively described below.

As illustrated in FIG. 3, the information processing apparatus 14 according to the present exemplary embodiment includes a CPU 14A as an example of a processor, a ROM 14B, a RAM 14C, a storage 14D, an operation unit 14E, a display unit 14F, and a communication line interface (I/F) unit 14G. The CPU 14A controls an operation of the whole information processing apparatus 14. The ROM 14B stores various control programs, various parameters, and the like in advance. The RAM 14C is used as a work area or the like when the CPU 14A executes various programs. The storage 14D stores various types of data, application programs, and the like. The operation unit 14E is used to input various types of information. The display unit 14F is used to display various types of information. The communication line I/F unit 14G is connected to the communication line 16 and transmits and receives various types of data to and from other apparatuses connected to the communication line 16. The communication line I/F unit 14G may be configured to directly communicate with each apparatus using various well-known types of wireless communication. The above units of the information processing apparatus 14 are electrically connected to each other by a system bus 14I. While the storage 14D is applied as a storage unit in the information processing apparatus 14 according to the present exemplary embodiment, a non-volatile storage unit such as a hard disk drive (HDD) or a flash memory is applied as an example of the storage.

With the above configuration, the information processing apparatus 14 according to the present exemplary embodiment executes, via the CPU 14A, each of access to the ROM 14B, the RAM 14C, and the storage 14D, acquisition of various types of data via the operation unit 14E, and display of various types of information on the display unit 14F. The information processing apparatus 14 executes, via the CPU 14A, a control of transmission and reception of communication data via the communication line I/F unit 14G.

Similarly, the operator terminal 12 according to the present exemplary embodiment executes, via a CPU 12A, each of access to a ROM 12B, a RAM 12C, and a storage 12D, acquisition of various types of data via an operation unit 12E, and display of various types of information on a display unit 12F. The operator terminal 12 executes, via the CPU 12A, a control of transmission and reception of communication data via a communication line I/F unit 12G.

Similarly, the user terminal 18 according to the present exemplary embodiment executes, via a CPU 18A, each of access to a ROM 18B, a RAM 18C, and a storage 18D, acquisition of various types of data via an operation unit 18E, and display of various types of information on a display unit 18F. The user terminal 18 executes, via the CPU 18A, a control of transmission and reception of communication data via a communication line I/F unit 18G.

Next, a functional configuration of the information processing apparatus 14 will be described. FIG. 4 is a block diagram illustrating an example of the functional configuration of the information processing apparatus 14. The information processing apparatus 14 is an example of an information processing system of the present disclosure.

Functionally, as illustrated in FIG. 4, the information processing apparatus 14 is configured to include an information storage unit 120, an answer model storage unit 122, a reception unit 124, a processing unit 126, and an output unit 128.

The information storage unit 120 stores various types of information necessary for executing each type of processing described later. For example, information related to each of a plurality of target apparatuses is stored.

The answer model storage unit 122 stores the above answer model. The answer model has a diagnostic function related to the failure in the target apparatus and is trained in advance using the learning information in the first language.

The reception unit 124 acquires first information indicating the conversation information between the user U who uses the target apparatus D and the operator Op or a system (for example, the information processing apparatus 14) that receives the inquiry related to the failure in the target apparatus D.

The conversation information is, for example, record information related to a conversation between the user U and the operator Op created by the operator Op. The record information is, for example, a memo in which the operator Op writes the conversation with the user U in a sentence. The record information includes, for example, only a summary of the inquiry from the user U.

Alternatively, the conversation information is, for example, sentence information in which audio information between the user U and the operator Op is transcribed in a sentence. The sentence information is generated using, for example, a well-known technology of transcribing the audio information into a sentence.

Alternatively, the conversation information may be, for example, information registered in the system (for example, the information processing apparatus 14) via the user terminal 18 operated by the user U who uses the target apparatus D. In this case, the conversation information may be, for example, sentence information generated by a chat between the user U and the operator Op (or a chatbot). Alternatively, the conversation information may be, for example, sentence information input by the user U on an inquiry screen provided by the system (for example, the information processing apparatus 14) by operating the user terminal.

The processing unit 126 acquires second information obtained by translating the language of the first information received by the reception unit 124 into the language of the learning information used for training the answer model stored in the answer model storage unit 122. While content of the second information is the same as content of the first information, the second information is information in which the language of the first information is translated.

Specifically, first, the processing unit 126 specifies which language is the language of the first information.

For example, the processing unit 126 specifies which language is the language of the first information in accordance with positional information of the target apparatus D for which the inquiry is made from the user U. For example, the operator Op hears an identification number of the target apparatus D during the conversation with the user U. In this case, the first information that is the conversation information includes the identification number of the target apparatus D. Thus, the processing unit 126 specifies which country the identification number of the target apparatus D included in the first information is positioned in, and acquires the positional information of the target apparatus D based on a result of specifying the country. For example, the processing unit 126 acquires the positional information of the target apparatus D with reference to information about the target apparatus D stored in the information storage unit 120. The processing unit 126 specifies which language is the language of the first information in accordance with positional information of the target apparatus D.

Alternatively, for example, the processing unit 126 specifies which language is the language of the first information in accordance with at least one of a text or words included in the first information. Specifically, the processing unit 126 specifies the language of the first information in accordance with a frequency of use of the text and a frequency of use of the words included in the first information. For example, in a case where an alphabet is frequently used in the first information, the processing unit 126 specifies the language of the first information as English. For example, in a case where simplified Chinese or traditional Chinese is frequently used in the first information, the processing unit 126 specifies the language of the first information as Chinese. Alternatively, the processing unit 126 specifies which language is the language of the first information in accordance with the words included in the first information. For example, even in a case where the text included in the first information is the alphabet, the language of the first information may also be assumed to be a language different from English. Thus, the processing unit 126 specifies which language is the language of the first information in accordance with the words included in the first information. In this case, the processing unit 126 may specify which language is the language of the first information using a well-known machine learning model.

Alternatively, for example, in a case where the conversation information is information registered via the user terminal 18 operated by the user U who uses the target apparatus D, the processing unit 126 specifies which language is the language of the first information in accordance with language setting information (for example, a language setting of a user terminal OS) of the user terminal 18.

In a case where the specified language is different from the language of the learning information of the answer model, the processing unit 126 acquires the second information by translating the specified language into the language of the learning information. The processing unit 126 acquires the answer information output from the answer model by inputting the second information into the answer model. Meanwhile, in a case where the specified language is the same as the language of the learning information, the processing unit 126 acquires the answer information output from the answer model by simply inputting the first information into the answer model.

In translating the first information into the second information, the processing unit 126 translates the first information into the second information using words used for training the answer model (for example, frequently used words, meaningful words, words indicating a name of the failure or a malfunction, or words indicating a name of a part of the target apparatus). For example, in translating the first information into the second information using a well-known large language model, the processing unit 126 translates the first information into the second information by inputting a prompt providing an instruction to translate the first information into the second information using the words used for training the answer model into the large language model.

The words included in the conversation information may be referred to differently from the words used for training the answer model. For example, even in a case where a word "X" is included in the conversation information, the word "X" may be referred to as "Y" in the field of the target apparatus, and the answer model may be trained in advance using the word "Y". In such a case, even in a case where the conversation information including the word "X" is input into the answer model, more accurate answer information is assumed not to be obtained. Therefore, in the present exemplary embodiment, in translating the first information into the second information, the first information is translated into the second information using the words used for training the answer model (for example, the frequently used words, the meaningful words, the words indicating the name of the failure or the malfunction, or the words indicating the name of the part of the target apparatus). Accordingly, a more accurate answer may be obtained compared to the answer in a case where the conversation information is simply translated.

The answer information is information indicating a measure for the failure in the target apparatus. The answer model of the present exemplary embodiment has the diagnostic function related to the failure in the target apparatus. Thus, for example, the answer information is information in which a specific countermeasure is expressed in a sentence (for example, "Please replace component ZZ"). Alternatively, for example, the answer information may be information including only identification information (for example, the component number) of a component that causes the failure.

The output unit 128 outputs the answer information acquired by the processing unit 126 as a result.

The answer information output from the output unit 128 is displayed on, for example, the display unit 12F of the operator terminal 12. In this case, the operator Op transmits the measure indicated by the answer information to the user U. Alternatively, the answer information output from the output unit 128 is output to a terminal different from the operator terminal 12. For example, in a case where the conversation is performed through a chat, the answer information may be displayed on the display unit 18F of the user terminal 18 operated by the user U. Alternatively, for example, the answer information may be displayed on a terminal (not illustrated) operated by a customer engineer or the like. In this case, the customer engineer checks the answer information and performs repair or the like of the target apparatus D with a replacement target component or the like.

Next, specific processing performed by the answer system 10 according to the present exemplary embodiment configured as described above will be described.

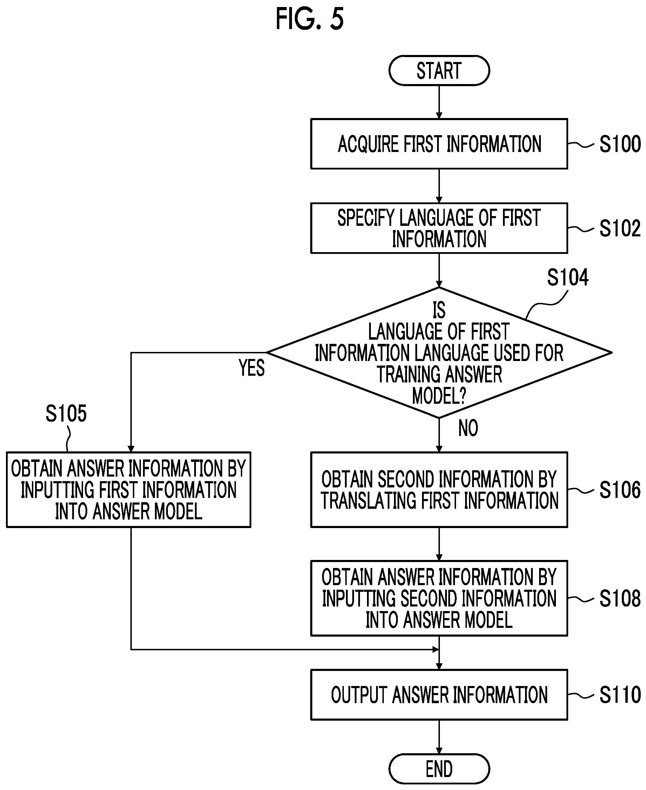

First, in the information processing apparatus 14, the information processing illustrated in Fig. 5 is performed by causing the CPU 14A to read an information processing program from the ROM 14B or the storage 14D, load the information processing program into the RAM 14C, and execute the information processing program.

In step S100, the CPU 14A acquires the first information indicating the conversation information between the user U and the operator Op who receives the inquiry related to the failure in the target apparatus D.

In step S102, the CPU 14A specifies which language is the language of the first information received in step S100.

In step S104, the CPU 14A determines whether or not the language of the first information specified in step S102 is the same as the language of the learning information of the answer model. In a case where the language of the first information is the same as the language of the learning information of the answer model, the processing transitions to step S105. Meanwhile, in a case where the language of the first information is different from the language of the learning information of the answer model, the processing transitions to step S106.

In step S105, the CPU 14A acquires the answer information output from the answer model by simply inputting the first information acquired in step S 100 into the answer model.

In step S106, the CPU 14A acquires the second information by translating the language specified in step S 102 into the language of the learning information.

In step S108, the CPU 14A acquires the answer information output from the answer model by inputting the second information acquired in step S106 into the answer model.

In step S110, the CPU 14A outputs the answer information acquired in step S105 or step S108 as a result.

While the exemplary embodiment of the present invention is described above, the exemplary embodiment of the present invention is not limited to the exemplary embodiment and may be subjected to various modifications and implementations without changing the gist of the present invention. For example, while the exemplary embodiment illustratively describes a case where the information processing apparatus 14 generates the answer information for the first information, the present invention is not limited to the exemplary embodiment. For example, the operator terminal 12, the user terminal 18, or the terminal (not illustrated) operated by the customer engineer may generate the answer information for the first information. Alternatively, for example, the target apparatus D may generate the answer information for the first information.

The information related to the target apparatus (for example, specifications, standards, or operation information of the target apparatus) may be inputtable into the answer model. In this case, the answer model is, for example, a machine learning model trained in advance based on the learning information in which the information about the failure in the target apparatus in the past, the information related to the target apparatus (for example, the specifications, the standards, or the operation information of the target apparatus), and the information about the countermeasure for the failure are associated with each other. In this case, in a case where the information related to the target apparatus and the first information are input into the answer model, the answer information is output from the answer model. By taking the information related to the target apparatus into consideration, higher-accuracy answer information may be obtained.

A part of the constituents of the exemplary embodiments may be removed or changed without changing the gist of the present invention. Steps in the flow of the exemplary embodiment can be, for example, added, deleted, changed, or switched without changing the gist of the present invention.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.
(((1))) An information processing system comprising:
   a processor configured to:
   acquire first information indicating conversation information between a user who uses a target apparatus and an operator or a system that receives an inquiry related to a failure in the target apparatus;
   acquire second information obtained by translating a language of the first information into a language of learning information used for training an answer model having a diagnostic function related to the failure;
   acquire answer information for the failure output from the answer model by inputting the second information into the answer model; and
   output the answer information.
(((2))) The information processing system according to (((1))),
   wherein the conversation information is at least one of record information related to a conversation between the user and the operator created by the operator or sentence information in which audio information between the user and the operator is transcribed in a sentence.
(((3))) The information processing system according to (((1))),
   wherein the first information is information registered in the system via a user terminal operated by the user.
(((4))) The information processing system according to any one of (((1))) to (((3))), wherein the processor is configured to:
   specify which language is the language of the first information; and
   acquire the second information obtained by translating the specified language into the language of the learning information.
(((5))) The information processing system according to (((4))), wherein the processor is configured to:
   specify which language is the language of the first information;
   in a case where the specified language is different from the language of the learning information, acquire the second information by translating the specified language into the language of the learning information, and acquire the answer information output from the answer model by inputting the second information into the answer model; and
   in a case where the specified language is the same as the language of the learning information, acquire the answer information output from the answer model by inputting the first information into the answer model.
(((6))) The information processing system according to (((4))) or (((5))), wherein the processor is configured to:
   specify which language is the language of the first information in accordance with positional information of the target apparatus.
(((7))) The information processing system according to (((4))) or (((5))),
   wherein the first information is information registered via a user terminal operated by the user who uses the target apparatus, and
   the processor is configured to:
      specify which language is the language of the first information in accordance with language setting information of the user terminal.
(((8))) The information processing system according to (((4))) or (((5))), wherein the processor is configured to:
   specify which language is the language of the first information in accordance with a text or a word included in the first information.
(((9))) The information processing system according to any one of (((1))) to (((8))), wherein the processor is configured to:
   in translating the first information into the second information, translate the first information into the second information using a word used for training the answer model.
(((10))) The information processing system according to any one of (((1))) to (((9))), wherein the processor is configured to:
   in translating the first information into the second information using a large language model, translate the first information into the second information by inputting a prompt providing an instruction to translate the first information into the second information using a word used for training the answer model into the large language model.
(((11))) An information processing program causing a computer to execute a process comprising:
   acquiring first information indicating conversation information between a user who uses a target apparatus and an operator who receives an inquiry related to a failure in the target apparatus;
   acquiring second information obtained by translating a language of the first information into a language of learning information used for training an answer model having a diagnostic function related to the failure;
   acquiring answer information for the failure output from the answer model by inputting the second information into the answer model; and
   outputting the answer information.

According to (((1))) or (((11))), in using a model that outputs an answer to the inquiry related to the failure in the target apparatus, the answer to the inquiry can be obtained using the model even in a case where the inquiry in a language different from the language used for training the model is received.

According to (((2))), the answer corresponding to the record information of the conversation actually created by the operator or the sentence information in which audio between the user and the operator is transcribed in a sentence can be obtained.

According to (((3))), the answer corresponding to the information actually input by the user can be obtained.

According to (((4))), translation corresponding to a language of inquiry information can be executed.

According to (((5))), in a case where the language of the inquiry is the same as the language used for training the answer model, the answer can be obtained by simply inputting the inquiry into the answer model.

According to (((6))), in accordance with whether or not the target apparatus is present at any location, the language of the inquiry can be translated into a language used at the location.

According to (((7))), the language of the inquiry can be easily specified using the language setting information of the terminal operated by the user.

According to (((8))), the language of the inquiry can be easily specified using the text or the word included in the inquiry.

According to (((9))), by translating the inquiry using the word used for training the answer model, a more accurate answer can be obtained compared to a case where the inquiry is simply translated.

According to (((10))), in executing translation using the large language model, by translating the inquiry using the word used for training the answer model, a more accurate answer can be obtained compared to a case where the inquiry is simply translated.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: answer system
12: information processing apparatus
12A, 14A, 18A: CPU
12B, 14B, 18B: ROM
12C, 14C, 18C: RAM
12D, 14D, 18D: storage
12E, 14E, 18E: operation unit
12F, 14F, 18F: display unit
12G, 14G, 18G: communication line I/F unit
12I, 14I, 18I: system bus
14: operator terminal
16: communication line
18: user terminal
120: information storage unit
122: answer model storage unit
124: reception unit
126: processing unit
128: output unit

## Claims

1. An information processing system comprising:
a processor configured to:
acquire first information indicating conversation information between a user who uses a target apparatus and an operator or a system that receives an inquiry related to a failure in the target apparatus;
acquire second information obtained by translating a language of the first information into a language of learning information used for training an answer model having a diagnostic function related to the failure;
acquire answer information for the failure output from the answer model by inputting the second information into the answer model; and
output the answer information.

2. The information processing system according to claim 1,
wherein the conversation information is at least one of record information related to a conversation between the user and the operator created by the operator or sentence information in which audio information between the user and the operator is transcribed in a sentence.

3. The information processing system according to claim 1,
wherein the first information is information registered in the system via a user terminal operated by the user.

4. The information processing system according to any one of claims 1 to 3, wherein the processor is configured to:
specify which language is the language of the first information; and
acquire the second information obtained by translating the specified language into the language of the learning information.

5. The information processing system according to claim 4, wherein the processor is configured to:
specify which language is the language of the first information;
in a case where the specified language is different from the language of the learning information, acquire the second information by translating the specified language into the language of the learning information, and acquire the answer information output from the answer model by inputting the second information into the answer model; and
in a case where the specified language is the same as the language of the learning information, acquire the answer information output from the answer model by inputting the first information into the answer model.

6. The information processing system according to claim 4 or 5, wherein the processor is configured to:
specify which language is the language of the first information in accordance with positional information of the target apparatus.

7. The information processing system according to claim 4 or 5,
wherein the first information is information registered via a user terminal operated by the user who uses the target apparatus, and
the processor is configured to:
specify which language is the language of the first information in accordance with language setting information of the user terminal.

8. The information processing system according to claim 4 or 5, wherein the processor is configured to:
specify which language is the language of the first information in accordance with a text or a word included in the first information.

9. The information processing system according to any one of claims 1 to 8, wherein the processor is configured to:
in translating the first information into the second information, translate the first information into the second information using a word used for training the answer model.

10. The information processing system according to any one of claims 1 to 9, wherein the processor is configured to:
in translating the first information into the second information using a large language model, translate the first information into the second information by inputting a prompt providing an instruction to translate the first information into the second information using a word used for training the answer model into the large language model.

11. An information processing program causing a computer to execute a process comprising:
acquiring first information indicating conversation information between a user who uses a target apparatus and an operator who receives an inquiry related to a failure in the target apparatus;
acquiring second information obtained by translating a language of the first information into a language of learning information used for training an answer model having a diagnostic function related to the failure;
acquiring answer information for the failure output from the answer model by inputting the second information into the answer model; and
outputting the answer information.

12. An information processing method comprising:
acquiring first information indicating conversation information between a user who uses a target apparatus and an operator who receives an inquiry related to a failure in the target apparatus;
acquiring second information obtained by translating a language of the first information into a language of learning information used for training an answer model having a diagnostic function related to the failure;
acquiring answer information for the failure output from the answer model by inputting the second information into the answer model; and
outputting the answer information.

## Amended claims

### Amended claims in accordance with Rule 137(2) EPC.

1. An information processing system (14) comprising:
a processor (14A) configured to:
acquire first information indicating conversation information between a user who uses a target apparatus (D) and an operator or a system that receives an inquiry related to a failure in the target apparatus (D);
determine whether a language of the first information is the same as a language of the learning information used for training an answer model having a diagnostic function related to the failure in the target apparatus (D);
in a case where the language of the first information is different from the language of the learning information, acquire second information obtained by translating a language of the first information into the language of learning information;
input the second information into the answer model and acquire answer information for the failure output from the answer model; and
output the answer information.

2. The information processing system (14) according to claim 1,
wherein the conversation information is at least one of record information related to a conversation between the user and the operator created by the operator or sentence information in which audio information between the user and the operator is transcribed in a sentence.

3. The information processing system (14) according to claim 1,
wherein the first information is information registered in the system via a user terminal operated by the user.

4. The information processing system (14) according to any one of claims 1 to 3, wherein the processor (14A) is configured to:
specify which language is the language of the first information; and
acquire the second information obtained by translating the specified language into the language of the learning information.

5. The information processing system (14) according to claim 4, wherein the processor (14A) is configured to:
specify which language is the language of the first information;
in a case where the specified language is different from the language of the learning information, acquire the second information by translating the specified language into the language of the learning information, and input the second information into the answer model and acquire the answer information output from the answer model; and
in a case where the specified language is the same as the language of the learning information, input the first information into the answer model and acquire the answer information output from the answer model.

6. The information processing system (14) according to claim 4 or 5, wherein the processor (14A) is configured to:
specify which language is the language of the first information in accordance with positional information of the target apparatus (D).

7. The information processing system (14) according to claim 4 or 5,
wherein the first information is information registered via a user terminal operated by the user who uses the target apparatus (D), and
the processor (14A) is configured to:
specify which language is the language of the first information in accordance with language setting information of the user terminal.

8. The information processing system (14) according to claim 4 or 5, wherein the processor (14A) is configured to:
specify which language is the language of the first information in accordance with a text or a word included in the first information.

9. The information processing system (14) according to any one of claims 1 to 8, wherein the processor (14A) is configured to:
in translating the first information into the second information, translate the first information into the second information using a word used for training the answer model.

10. The information processing system (14) according to any one of claims 1 to 9, wherein the processor (14A) is configured to:
in translating the first information into the second information using a large language model, translate the first information into the second information by inputting a prompt providing an instruction to translate the first information into the second information using a word used for training the answer model into the large language model.

11. An information processing program causing a computer (14) to execute a process comprising:
acquiring first information indicating conversation information between a user who uses a target apparatus (D) and an operator who receives an inquiry related to a failure in the target apparatus (D);
determining whether a language of the first information is the same as a language of the learning information used for training an answer model having a diagnostic function related to the failure in the target apparatus (D);
in a case where the language of the first information is different from the language of the learning information, acquiring second information obtained by translating a language of the first information into the language of learning information;
inputting the second information into the answer model and acquiring answer information for the failure output from the answer model; and
outputting the answer information.

12. An information processing method comprising:
acquiring first information indicating conversation information between a user who uses a target apparatus (D) and an operator who receives an inquiry related to a failure in the target apparatus (D);
determining whether a language of the first information is the same as a language of the learning information used for training an answer model having a diagnostic function related to the failure in the target apparatus (D);
in a case where the language of the first information is different from the language of the learning information, acquiring second information obtained by translating a language of the first information into the language of learning information;
inputting the second information into the answer model and acquiring answer information for the failure output from the answer model; and
outputting the answer information.
